# EUROPEAN PATENT SPECIFICATION

(11) **EP 0 332 941 B1**
(45) Date of publication and mention of the grant of the patent: **13.10.1993**
(21) Application number: 89103631.1
(22) Date of filing: 02.03.1989
(51) Int. Cl.: G21C 3/34

(54) **Fuel-rod support grid for a nuclear fuel assembly**
Kernbrennstoffbündelstützgitter
Grille de support pour l'assemblage de combustible nucléaire

(30) Priority: 14.03.1988 US 168060
(43) Date of publication of application: 20.09.1989
(73) Proprietor: WESTINGHOUSE ELECTRIC CORPORATION, Pittsburgh Pennsylvania 15222 (US)
(72) Inventor: Demario, Edmund Emory, Columbia, SC 29205 (US)
(74) Representative: Gallo, Wolfgang, Dipl.-Ing. (FH)

(56) References cited:
- FR-A- 2 365 182

## Description

The present invention relates generally to nuclear fuel assemblies and, more particularly, to an improved fuel-rod supporting grid therefor.

In most nuclear reactors, the reactor core is composed of a large number of elongate fuel assemblies each including a plurality of fuel rods which are held in an organized array by means of support grids spaced axially along the fuel assembly and attached to elongate structural members, such as control-rod guide thimbles. The top and bottom nozzles of each fuel assembly are attached to opposite end portions of the structural members extending somewhat beyond the ends of the fuel rods.

As well known in the art, the chief function of the support grids is to laterally support the fuel rods against vibration and to maintain them precisely spaced from one another. To some degree, they also serve to frictionally hold the fuel rods against longitudinal displacement thereof.

In Applicant's U.S-A-. 4,492,844, there is disclosed a typical fuel-rod support grid composed of metallic inner and outer straps which are interleaved egg-crate-like to define open-ended cells for receiving individual fuel rods or, with respect to some of them, control-rod guide thimbles. The fuel-rod receiving grid cells have disposed therein detents, such as relatively resilient springs and/or relatively rigid protrusions called dimples, which are formed out of the metal of the interleaved straps and project into the respective cells to frictionally engage and thereby laterally support the fuel rods extending therethrough. The outer or peripheral straps of each grid are connected to the ends of the inner straps to impart to the grid strength and rigidity. In this and other conventional grids of similar design, the grid springs are oriented vertically, i.e. in a direction parallel to the longitudinal axes of the respective grid cells and, thus, to the direction of coolant flow through the cells, so that their length, determined by the resilience required of the springs, has a direct bearing upon the height of the grids. Of course, the height of each support grid forming part of a given fuel assembly bears directly upon the amount of neutron-parasitic structural material present in the fuel assembly and upon the pressure drop of coolant flowing therethrough.

In Applicant's European patent application No. 88106732.6, there is described and claimed a fuel-rod supporting grid which employs spring structures designed such as to reduce the grid height required to accommodate grid springs of a given effective length. Another pertinent prior art is disclosed in FR-A-2365182.

The present invention has for its principal object to provide a grid with similar spring structures, but spring structures which are further improved to permit a weld-free interleaving of the grid straps without ill-effect upon the desired resiliency of the grid springs.

The invention accordingly resides in a nuclear fuel-rod supporting grid composed of a plurality of straps interleaved with one another to form a matrix of fuel-rod receiving cells each defined by strap sections which form walls of the respective cell and of cells adjacent thereto and which have resiliently yieldable fuel-rod engaging spring structures formed integral therewith and projecting into the respective fuel-rod receiving cells, characterized in that each of said spring structures comprises an elongate spring element having two outer portions each of which has its outer end integrally connected to the associated strap section, and a middle portion which extends between and is integrally connected to the said outer portions at the inner ends thereof, said outer portions extending, generally in longitudinal alignment with each other, in a direction diagonal with respect to the longitudinal axis of the associated cell, and said middle portion extending in a direction transverse with respect to said longitudinal axis.

Preferably, the two outer portions of the elongate spring element are inclined at an angle of substantially forty-five degrees with respect to the direction of the longitudinal axis of the associated grid cell. This angle appears to be optimal for reducing grid height and exposing a minimum of grid-spring profile to coolant flow.

It has been found that in addition to reducing the necessary height of a fuel-rod supporting grid, the use of diagonal rather than vertical grid springs also increases the overall strength of the grid, and that this allows the grid straps to be interleaved without being welded together at their intersections. Dispensing with welding, and consequently also with forming weld cavities in the grid straps, results in a substantial saving in manufacturing costs. However, it was discovered that the elimination of weld cavities and the consequential removal of less material from the strap sections adjacent the diagonal spring structures can result in an undesirable stiffening of diagonal grid-spring structure, a drawback which according to the present invention is overcome by providing the otherwise substantially diagonal spring element with a middle portion which extends in a direction substantially transverse, or perpendicular, with respect to the longitudinal axis of the associated grid cell and, hence, to the fuel rod extending therethrough. In addition to reducing spring stiffness, this transverse mid-portion of the spring element has also been found to contribute to minimizing the risk of a fuel rod being scratched as it slides past the spring structures within a grid cell upon being inserted therein.

A preferred embodiment of the invention will now be described, by way of example only, with reference to the accompanying drawings, in which:-
Figure 1 is an elevational view, partly in section, of a fuel assembly illustrated in vertically foreshortened form and with parts broken away for clarity;
Fig. 2 is an enlarged top plan view, as seen along line 2--2 of Fig. 1, of one of the fuel rod support grids forming part of the fuel assembly shown in Fig. 1;
Fig. 3 is an enlarged fragmentary top plan view of the lower right-hand corner of the grid shown in Fig. 2;
Figs. 4 and 5 are elevational views of end portions of outer grid straps meeting to form the corner of the grid, as seen respectively along lines 4--4 and 5--5 in Fig. 3;
Fig. 6 is an enlarged fragmentary top plan view of one of a first set of the inner straps of the grid embodying the invention;
Fig. 7 is a side elevational view as seen along line 7--7 of Fig. 6;
Fig. 8 is another side elevational view as seen along line 8--8 of Fig. 6;
Fig. 9 is an enlarged fragmentary top plan view of one of a second set of the inner straps which interfit with the inner straps of the first set to form the grid;
Fig. 10 is a side elevational view as seen along line 10--10 of Fig. 9;
Fig. 11 is another side elevational view as seen along line 11--11 of Fig. 9;
Fig. 12 is a fragmentary portion of the side elevational view of Fig. 11;
Fig. 12A is a view similar to Fig. 12 but showing an unmodified diagonal spring structure such as disclosed and claimed in Applicant's European Patent Application No. 88 106 732.6;
Fig. 13 is an end elevational view as seen along line 13--13 of Fig. 12;
Fig. 14 is a sectional view taken along line 14--14 of Fig. 12;
Fig. 15 is an enlarged sectional view taken along line 15--15 of Fig. 12 and showing the curvature of the modified diagonal spring structure on the inner strap;
Fig. 16 is an enlarged sectional view taken along line 16--16 of Fig. 12 and showing the curvature of one of the dimples on the inner strap;
Fig. 17 is an enlarged sectional view taken along line 17--17 of Fig. 12 and showing the curvature of the modified diagonal spring structure on the inner strap;
Fig. 18 is an enlarged fragmentary portion of the front view of the inner strap in Fig. 12; and
Fig. 19 is a sectional view taken along line 19--19 of Fig. 18 and showing the curvature of the modified diagonal spring structure on the inner strap.

In the following description, like reference characters designate like or corresponding parts throughout the various views of the drawings, and terms such as "forward", "rearward", "left", "right", "upwardly", "downwardly", and the like are used as words of convenience not to be construed as limiting terms.

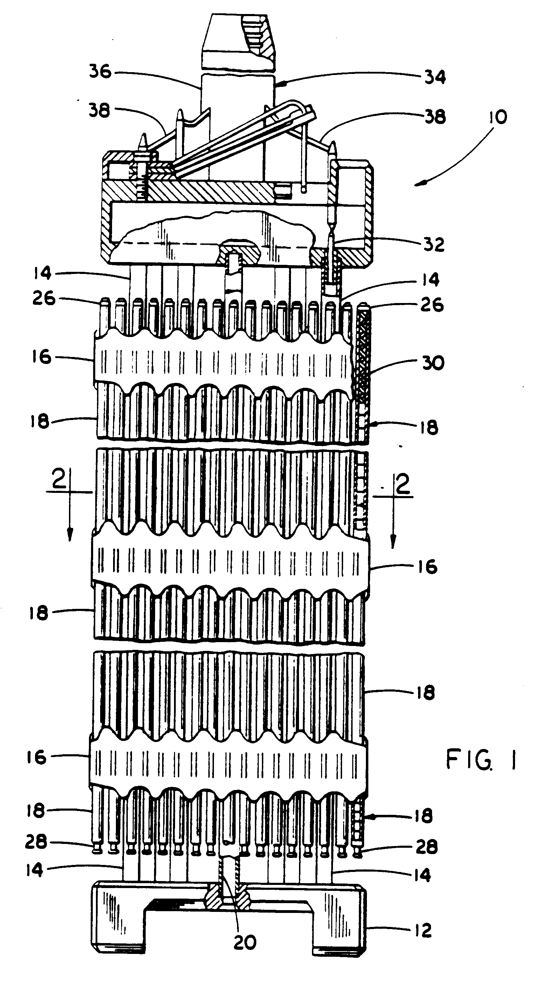

Referring now to the drawings, and particularly to Fig. 1, the fuel assembly illustrated therein and generally designated with numeral 10 is of the type commonly used in pressurized water reactors (PWR). Basically, it comprises a lower end structure or bottom nozzle 12 for supporting the assembly on the lower core plate (not shown) in the core region of a reactor (not shown), a number of guide tubes or thimbles 14 longitudinally extending upward from the bottom nozzle 12; a plurality of transverse grids 16 axially spaced apart along, and supported by, the guide thimbles 14; a plurality of elongate fuel rods 18 transversely spaced and supported in an organized array by the grids 16; an instrumentation tube 20 located in the center of the fuel assembly, and an upper end structure or top nozzle 22 attached to the upper ends of the guide thimbles 14. With this arrangement of parts, the fuel assembly 10 forms an integral unit capable of being conveniently handled without causing damage to the assembly parts.

Each of the fuel rods 18 contains nuclear fuel pellets 24 and has its opposite ends hermetically sealed by means of end plugs 26, 28, a plenum spring 30 being disposed between the upper end plug 26 and the pellets 24 to maintain the pellets firmly stacked within the rod 18.

The top nozzle 22 supports therewith a rod cluster control mechanism 34 including an internally threaded cylindrical member 36 with radially extending flukes or arms 38, each of which is connected to a control rod 32 in one of the guide thimbles. The control mechanism 34 is operable to axially move the control rods 32 so as to control the fission process in the fuel assembly 10, all as well known in the art.

### Grids With Modified Diagonal Spring Structures

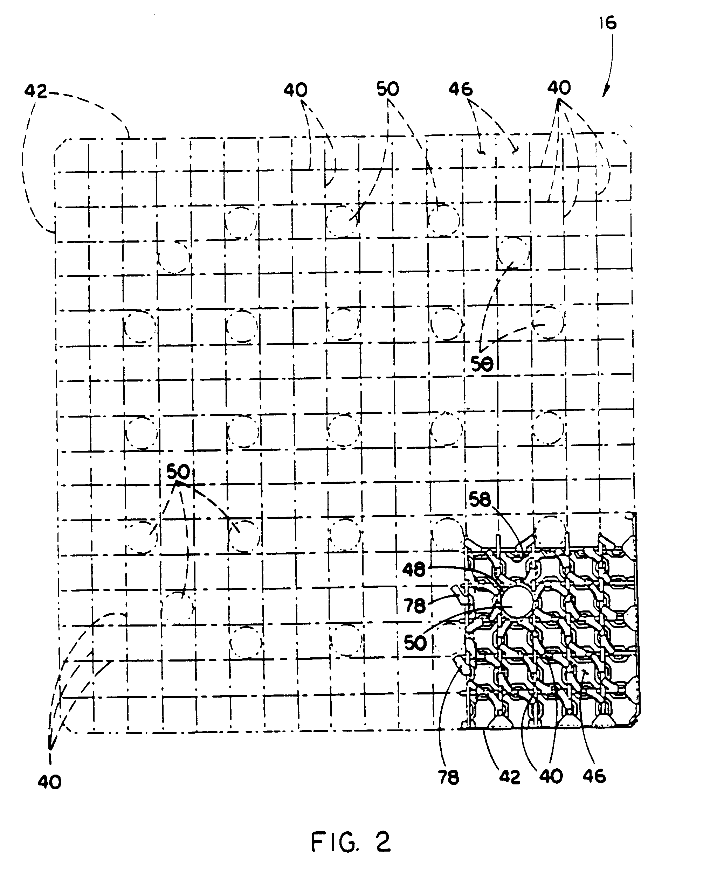

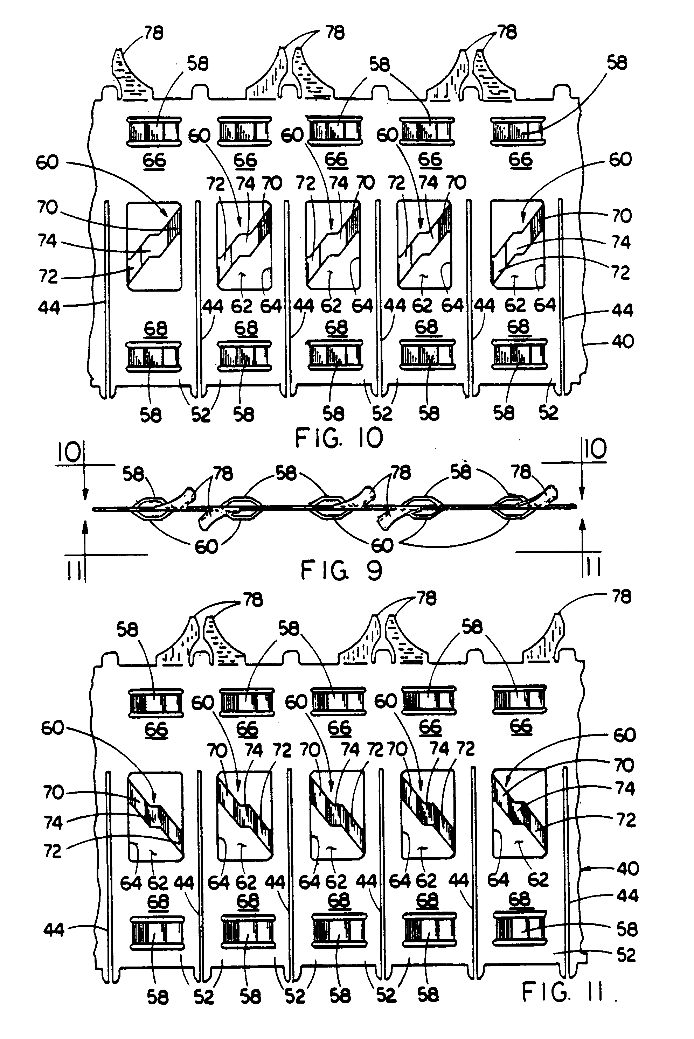

Referring now to Figs. 2 to 11, the fuel-rod support grid 16 illustrated therein is composed of inner and outer straps 40, 42 having slots 44 which enable the straps to be interleaved with one another in egg-crate-like fashion so as to form a matrix of open-ended cells 46 and openings 48. Owing to the inventive features incorporated in the grid 16, it is no longer necessary to weld the straps together at their intersections. The cells 46 of the grid 16 are designed each to receive one of the fuel rods 18, whereas the openings 48 have inserted therein sleeves 50 which are attached to the inner straps 40 and employed to affix the grid 16 to the guide thimbles 14.

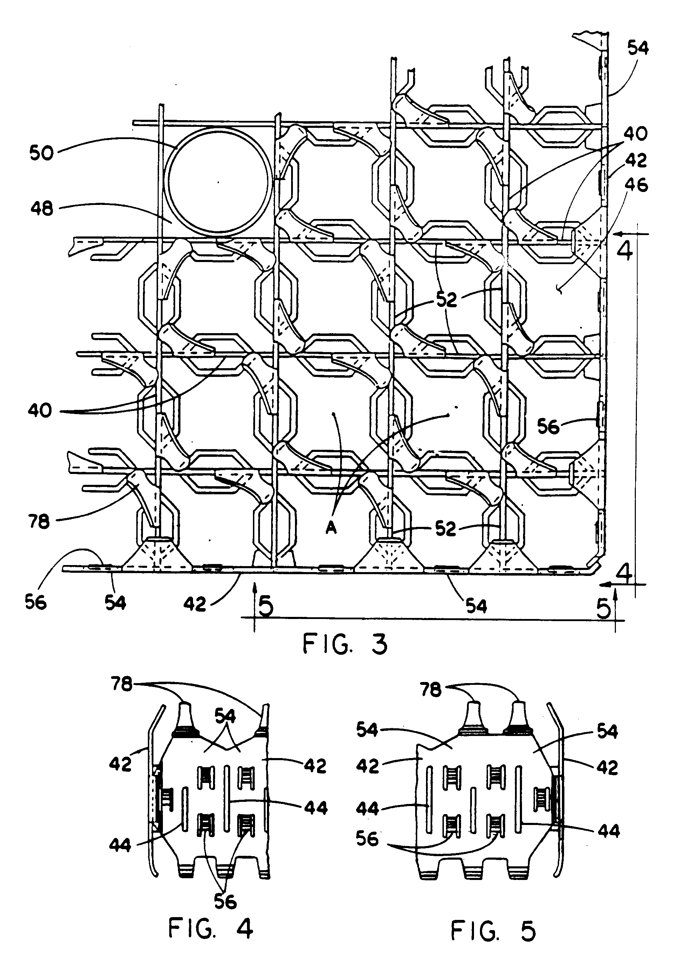

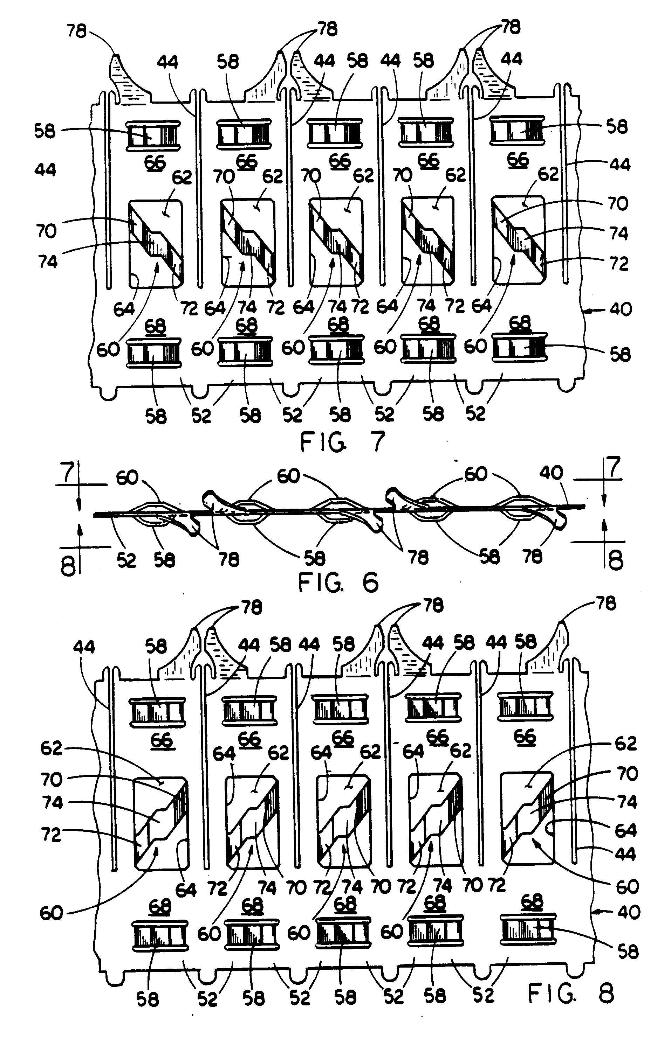

Each fuel-rod receiving cell 46 is defined by two pairs of opposing walls extending substantially parallel to the central longitudinal axis A of the cell and formed by sections of the straps which have fuel-rod supporting detents formed thereon. More particularly, and as shown in Figs. 3 to 5, the outer straps 42 define cell-wall sections 54, each of which has a pair of horizontally extending and vertically spaced fuel-rod engaging dimples 56 formed integral therewith and associated with the adjacent cell 46. Similarly, and as seen best from Figs. 6 to 11, the inner straps 40 define cell-wall sections 52 each of which has a pair of horizontally extending and vertically spaced fuel-rod engaging dimples 58 formed integral therewith and associated with one cell 46. One of the dimples 58 on each wall section 52 of the inner straps 40 is located above a modified diagonal spring structure 60 embodying the invention, whereas the other dimple 58 is located below it. Each cell 46 formed along the periphery of the grid 16 by the inner and outer straps 40, 42 has associated therewith four dimples 56, 58 and two spring structures 60, and each cell 46 formed in the grid 16 only by inner straps 40 has associated therewith four dimples 58 and two spring structures 60. Thus, the fuel rod in each cell 46 is contacted at six circumferentially and axially displaced locations thereon. If desired, the grid 16 may have flow mixing vanes 78 formed on the inner and outer straps 40, 42 along the upper (or downstream, having regard to coolant flow direction) edges thereof.

Referring now particularly to Figs. 6 to 19, the modified spring structures 60 according to the invention are formed from resiliently yieldable flexible material of the inner straps 40, such as stainless steel, the components of each spring structure 60 being integrally formed, such as by a conventional stamping operation, from the respective wall section 52 of the inner straps 40. Thus, each inner grid strap wall section 52 has a window-like opening 62 formed therein by removal of portions of the wall section leaving the spring structure 60 in place to extend diagonally across the opening 62 and with its opposite ends integrally connected to vertical wall section edges 64 along the opening 62 at diagonally opposite upper and lower locations adjacent upper and lower portions 66, 68 of the walls sections 52.

Basically, each modified diagonal spring structure 60 is integrally composed of spaced-apart upper and lower opposite outer portions 70, 72 and a middle inner portion 74 therebetween. The outer portions 70, 72 of each spring structure 60 have their respective outer ends 70A, 72A integrally connected to the respective wall section edges 64 adjacent the upper and lower wall section portions 66, 68, respectively, and they extend in substantial longitudinal alignment with one another and at an inclined angle, preferably of forty-five degrees, with respect to the central longitudinal axis A of the respective grid cell 46. The middle inner portion 74 of each spring structure 60, having its opposite outer ends 74A integrally connected to the inner ends 70B, 72B of the upper and lower outer portions 70, 72, respectively, extends in a generally transverse direction, and preferably perpendicular or at ninety degrees, with respect to the central longitudinal axis A of the respective cell 46.

The upper and lower outer portions 70, 72 of each spring structure 60 have respective pairs of spaced lateral edges 70C, 72C which extend in diagonal relation to the cell axis A. However, the lateral edges 70C of one pair thereof are offset from the corresponding lateral edges 72C of the other pair thereof in the direction of the cell axis A. The middle portion of each spring structure 60 has a pair of spaced lateral edges 74B which extend in generally transverse or substantially perpendicular relation to the cell axis A and interconnect the offset pairs of edges 70C, 72C of the upper and lower outer portions 70, 72.

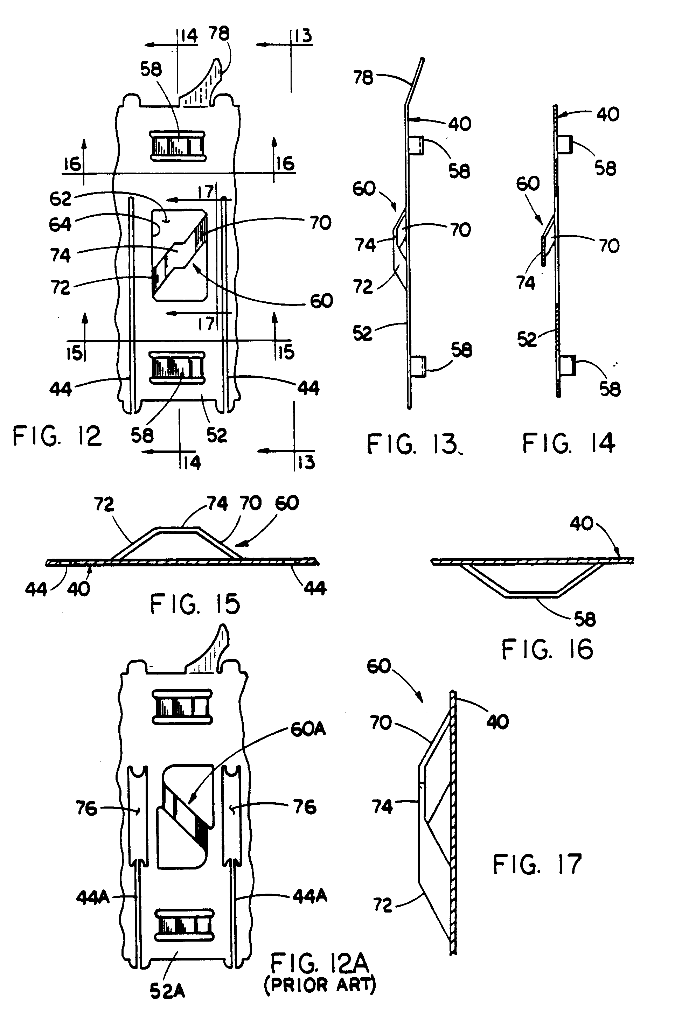

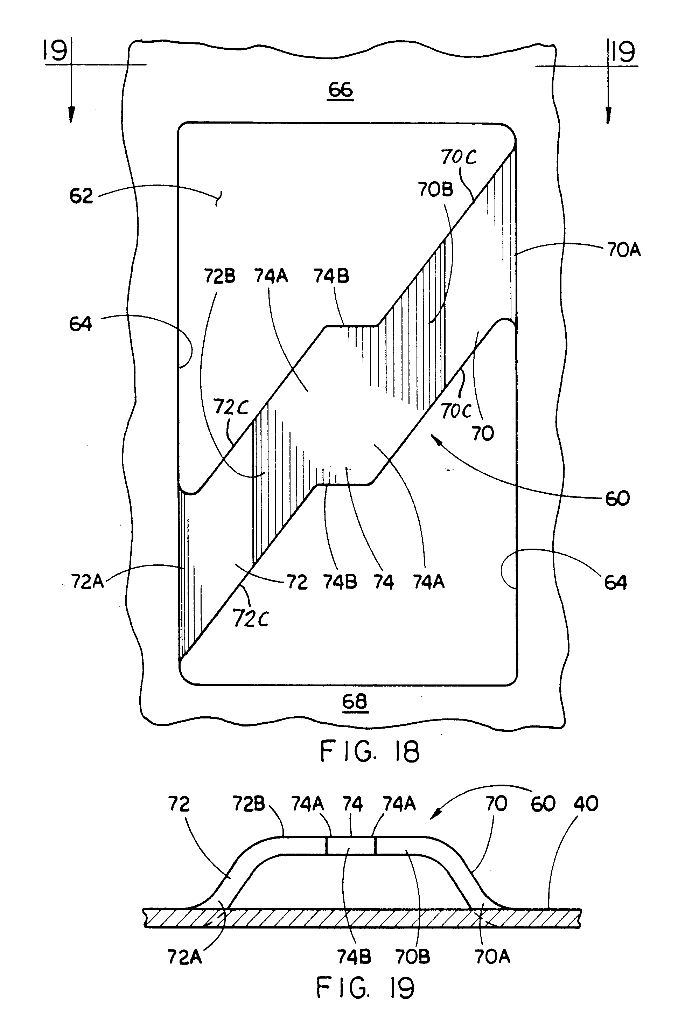

More particularly, and as readily seen from Figs. 17 and 19, the upper and lower outer portions 70, 72 of each spring structure 60 extend in inclined fashion away from their outer ends 70A, 72A and from the associated wall section 52 and toward one another into the associated grid cell 46. On the other hand, each spring structure 60 has its middle inner portion 74 and the inner ends 70B, 72B of its outer portions 70, 72 disposed in a common plane spaced inward of the cell 46 from, and extending generally parallel to, the respective wall section 52. The middle portion 74 is positioned to contact the fuel rod 18 in the cell 46 in generally transverse or substantially perpendicular relation thereto or, in other words, such that its laterally extending upper and lower edges 74B extend in generally transverse or substantially perpendicular relationship with respect to the fuel rod 18. The spring structure 60 having this configuration is capable of resiliently deflecting or yielding in a direction generally orthogonal to and away from the longitudinal axis A of the associated cell 46, and toward its associated wall section 52, when engaged by a fuel rod 18 being inserted into the cell 46. Defined between the inwardly projecting spring structure 60 and the associated wall section 52 there is an open space which permits unimpeded flow of coolant fluid therethrough and along the fuel rod 18 extending through the cell 46.

Setting the modified diagonal spring structure 60 at an angle of about forty-five degrees relative to the longitudinal axis A of the grid cell 46 and of the fuel assembly 10 in which the grid 16 is used appears to be optimal for reducing the grid height and minimizing the spring profile exposed to coolant flow.

Summing up, and referring in particular to Fig. 12A showing a diagonal spring structure 60A such as disclosed in Applicant's aforesaid European patent application, the present invention sprang, as initially mentioned herein, from the discovery that the use of diagonal instead of vertical spring structures increases the overall strength of a support grid sufficiently to allow welds at the intersections between the grid straps 40A, and consequently weld openings or cavities 76 in the grid straps sections 52A adjacent the spring structures 60A, to be dispensed with, yet that omitting the weld cavities 76 tends to undesirably increase the stiffness of the diagonal spring structures 60A. As has also been found, this problem can be overcome, in accordance with the invention, by modifying the spring structure 60A in a manner such as to provide its diagonal spring element with a transverse or substantially horizontal middle portion 74, the longitudinal edges 74B (see Fig. 18) of which extend in a direction substantially transverse or perpendicular with respect to the longitudinal axis of the associated grid cell. The resultant modified diagonal spring structure 60 reduces the grid height, offers a very small profile to coolant flow, and has a low spring constant. During manufacture, the modified diagonal spring structures 60, or rather the windows 62 defining them, are stamped out in a direction parallel to the longitudinal axes of the grid cells, i.e. to the direction of coolant flow through the cells.

## Claims

1. A nuclear fuel-rod supporting grid (16) composed of a plurality of straps (40, 42) interleaved with one another to form a matrix of fuel-rod receiving cells (46) each defined by strap sections (52, 54) which form walls of the respective cell and of cells adjacent thereto and which have resiliently yieldable fuel-rod engaging spring structures (60) formed integral therewith and projecting into the respective fuel-rod receiving cells, characterized in that each of said spring structures (60) comprises an elongate spring element having two outer portions (70, 72) each of which has its outer end (70A, 72A) integrally connected to the associated strap section (52), and a middle portion (74) for contacting a fuel rod, when received in the associated cell (46), and which middle portion extends between and is integrally connected to said outer portions at the inner ends (70B, 72B) thereof, said outer portions (70, 72) extending, generally in longitudinal alignment with each other, in a direction diagonal with respect to the longitudinal axis of the associated cell (46), and said middle portion (74) extending in a direction substantially transverse with respect to said longitudinal axis,
said outer portions(70, 72) having respective pairs of spaced lateral edges (70C, 72C) which extend in diagonal relation to said cell axis and are offset from one another in the direction of said cell axis; and said middle portion (74) having a pair of spaced lateral edges (74B) which extend in transverse relation to said cell axis and interconnect said offset pairs of edges (70C, 72C) of said outer portions (70, 72).

2. A nuclear fuel-rod supporting grid according to claim 1, characterized in that said outer portions (70, 72) are inclined substantially forty-five degrees with respect to the direction of the longitudinal axis of the associated cell (46).

3. A nuclear fuel-rod supporting grid according to claim 1 or 2, characterized in that said middle portion (74) extends in a direction of substantially ninety degrees with respect to the longitudinal axis of the associated cell (46).

4. A nuclear fuel-rod supporting grid according to claim 1, 2 or 3, characterized in that said outer portions (70, 72) extend from the associated strap section (52) at inclined angles relative thereto, and said middle portion (74) lies in a plane spaced from and substantially parallel to said associated strap section (52).

## Patentansprüche

1. Kernbrennstabhaltegitter (16), das aus einer Vielzahl von Streifen (40, 42) zusammengesetzt ist, die zur Bildung einer Matrix von brennstabaufnehmenden Zellen (46) ineinandergesteckt sind, wobei die Zellen jeweils durch Streifenabschnitte (52, 54) definiert sind, die Wände der betreffenden Zelle und von dazu benachbarten Zellen bilden und die elastisch nachgebende, am Brennstab anliegende Federkonstruktionen (60) aufweisen, die damit einstückig ausgebildet sind und in die betreffenden brennstabaufnehmenden Zellen hinein vorspringen, dadurch gekennzeichnet, daß jede dieser Federkonstruktionen (60) ein längliches Federelement mit zwei äußeren Teilen (70, 72) aufweist, die jeweils mit ihrem äußeren Ende (70A, 72A) einstückig mit dem zugehörigen Streifenabschnitt (52) verbunden sind, und einen Mittelteil (74) aufweist, der an einem Brennstab anliegt, wenn dieser in der betreffenden Zelle (46) aufgenommen ist, und wobei der Mittelteil zwischen den äußeren Teilen verläuft und einstückig mit deren inneren Enden (70B, 72B) verbunden ist, und wobei die äußeren Teile (70, 72) etwa in Längsrichtung miteinander fluchtend in bezüglich der Längsachse der zugeordneten Zelle (46) diagonaler Richtung verlaufen und der Mittelteil (74) in einer mit Bezug auf diese Längsachse etwa in Querrichtung verläuft, wobei weiter die äußeren Teile (70, 72) jeweils Paare von beabstandeten Seitenkanten (70C, 72C) aufweisen, die in diagonaler Richtung mit Bezug auf die Zellenachse und in Richtung der Zellenachse voneinander versetzt verlaufen, und der Mittelteil (74) zwei beabstandete Seitenkanten (74B) aufweist, die quer zur Zellenachse verlaufen und die versetzten Kantenpaare (70C, 72C) der äußeren Teile (70, 72) miteinander verbinden.

2. Kernbrennstabhaltegitter nach Anspruch 1, dadurch gekennzeichnet, daß die äußeren Teile (70, 72) im wesentlichen unter 45° mit Bezug auf die Richtung der Längsachse der zugehörigen Zelle (46) geneigt verlaufen.

3. Kernbrennstabhaltegitter nach Anspruch 1 oder 2, dadurch gekennzeichnet, daß der Mittelteil (74) unter etwa 90° mit Bezug auf die Längsachse der zugehörigen Zelle (46) verläuft.

4. Kernbrennstabhaltegitter nach Anspruch 1, 2 oder 3, dadurch gekennzeichnet, daß die äußeren Teile (70, 72) jeweils unter einem Winkel relativ zum zugehörigen Streifenabschnitt (52) geneigt verlaufen und der Mittelteil (74) in einer von dem zugehörigen Streifenabschnitt (52) beabstandeten und dazu etwa parallelen Ebene liegt.

## Revendications

1. Grille (16) de support de barres de combustible nucléaire composée d'une pluralité de bandes (40, 42) imbriquées mutuellement de manière à former une matrice de cellules (46) réceptrice de barres de combustible définies chacune par des sections (52, 54) de bandes qui forment les parois des cellules respectives et des cellules adjacentes à ces dernières et qui comportent des structures élastiques (60) pouvant fléchir élastiquement et portant contre les barres de combustible, ces structures faisant corps avec les sections de bandes et faisant saillie dans les cellules respectives réceptrices de barres de combustible, caractérisée en ce que chacune desdites structures élastiques (60) comprend un élément élastique allongé comportant deux parties extérieures (70, 72) dont chacune fait corps, à son extrémité extérieure (70A, 72A), avec la section de bande associée (52), et une partie médiane (74) destinée à porter contre une barre de combustible quand celle-ci est reçue dans la cellule associée (46), et dont la partie médiane s'étend entre les parties extérieures aux extrémités intérieures (70B, 72B) de ces dernières, et fait corps avec ces parties extérieures, lesdites parties extérieures (70, 72) s'étendant, de façon générale, en étant alignées longitudinalement l'une avec l'autre, dans une direction diagonale par rapport à l'axe longitudinal de la cellule associée (46), et ladite partie médiane (74) s'étendant dans une direction sensiblement transversale audit axe longitudinal, lesdites parties extérieures (70, 72) comportant des paires respectives de bords latéraux espacés (70C, 72C) qui s'étendent diagonalement par rapport audit axe de la cellule et sont décalées les unes des autres dans la direction dudit axe de la cellule; et ladite partie médiane (74) comportant une paire de bords latéraux espacés (74B) qui s'étendent transversalement audit axe de cellule et relie mutuellement lesdites paires décalées de bords (70C, 72C) des parties extérieures (70, 72).

2. Grille de support de barres de combustible nucléaire selon la revendication 1, caractérisée en ce que les parties extérieures (70, 72) sont inclinées sensiblement de 45° par rapport à la direction de l'axe longitudinal de la cellule associée (46).

3. Grille de support de barres de combustible nucléaire selon la revendication 1 ou 2, caractérisée en ce que la partie médiane (74) s'étend dans une direction faisant un angle de 90° avec un axe longitudinal de la cellule associée (46).

4. Grille de support de barres de combustible nucléaire selon la revendication 1, ou 2 ou 3, caractérisée en ce que les parties extérieures (70, 72) s'étendent depuis la section de bande associée (52) en étant inclinées par rapport à cette dernière, et la partie médiane (74) se trouve dans un plan espacé de la section de bande associée (52) de façon essentiellement parallèle à cette section.
